# EUROPEAN PATENT APPLICATION

(11) **EP 4 539 512 A1**
(43) Date of publication of application: **16.04.2025**
(21) Application number: 24204758.7
(22) Date of filing: 04.10.2024
(51) Int. Cl.: H04W 4/06, G06Q 30/0202, H04N 21/6405

(54) **PREDICTION-DRIVEN MOBILE BROADCAST**

(30) Priority: 10.10.2023 US 202318484353
(71) Applicant: T-Mobile USA, Inc., Bellevue, WA 98006-1350 (US)
(72) Inventor: LIU, SR., Jun, Bellevue, 98006 (US); GRONSTAD, Egil, Bellevue, 98006 (US)
(74) Representative: Suddaby, Mark Edward

(57) **Abstract**

Solutions are disclosed that provide for prediction-driven mobile broadcast in order to increase the number of user equipment (UEs) that move from point-to-point (P2P) data traffic to point-to-multipoint (P2MP) for video consumption. This improves the demand for broadcast video by ensuring that more popular content is broadcast. Examples include: a sensor operable to determine, using a cellular uplink, data consumption information for a plurality of user equipment (UEs) receiving a broadcast; a correlator operable to correlate the data consumption information with content identification in a first broadcast schedule into demand statistics; and a demand prediction engine operable to generate demand predictions based on at least the demand statistics, wherein the demand predictions indicate a future demand for content data sets in a future time period.

## Description

### BACKGROUND

Streaming video is popular in wireless networks, such as cellular networks, but places a significant demand on network bandwidth when provided as point-to-point (P2P) data traffic. Point-to-multipoint (P2MP), including broadcasts, has the potential to provide efficiencies that reduce network bandwidth demand, but can only be realized if the user equipment (UEs) swap from consuming P2P material to consuming the P2MP material. Unfortunately, in many broadcast scenarios, the broadcasting entity may be unable to predict demand sufficiently to lure UEs from P2P to P2MP, leaving the full extent of the potential benefits unrealized.

### SUMMARY

The following summary is provided to illustrate examples disclosed herein, but is not meant to limit all examples to any particular configuration or sequence of operations.

Solutions are disclosed that provide for prediction-driven mobile broadcast. Examples include: a sensor operable to determine, using a cellular uplink, data consumption information for a plurality of user equipment (UEs) receiving a broadcast; a correlator operable to correlate the data consumption information with content identification in a first broadcast schedule into demand statistics; and a demand prediction engine operable to generate demand predictions based on at least the demand statistics, wherein the demand predictions indicate a future demand for content data sets in a future time period.

### BRIEF DESCRIPTION OF THE DRAWINGS

The disclosed examples are described below with reference to the accompanying drawing figures listed below, wherein:
FIG. 1 illustrates an exemplary architecture that advantageously provides for prediction-driven mobile broadcast;
FIG. 2 illustrates a demand analyzer, which includes a demand prediction engine, as may be used in examples of the architecture of FIG. 1;
FIG. 3 illustrates a content schedule optimizer, as may be used in examples of the architecture of FIG. 1;
FIG. 4 illustrates further detail for the wireless network of the architecture of FIG. 1;
FIGs. 5 and 6 illustrate flowcharts of exemplary operations associated with examples of the architecture of FIG. 1; and
FIG. 7 illustrates a block diagram of a computing device suitable for implementing various aspects of the disclosure.

Corresponding reference characters indicate corresponding parts throughout the drawings. References made throughout this disclosure. relating to specific examples, are provided for illustrative purposes, and are not meant to limit all implementations or to be interpreted as excluding the existence of additional implementations that also incorporate the recited features.

### DETAILED DESCRIPTION

Solutions are disclosed that provide for prediction-driven mobile broadcast in order to increase the number of user equipment (UEs) that move from point-to-point (P2P) data traffic to point-to-multipoint (P2MP) for video consumption. This improves the demand for broadcast video by ensuring that more popular content is broadcast. Examples include: a sensor operable to determine, using a cellular uplink, data consumption information for a plurality of user equipment (UEs) receiving a broadcast; a correlator operable to correlate the data consumption information with content identification in a first broadcast schedule into demand statistics; and a demand prediction engine operable to generate demand predictions based on at least the demand statistics, wherein the demand predictions indicate a future demand for content data sets in a future time period.

Aspects of the disclosure improve the efficiency of cellular networks, by reducing the number of UEs engaged in P2P video streaming traffic, because the available P2MP material more closely matches demand. This reduces the amount of cellular network resources needed to serve a given number of UEs and/or permits serving a larger number of UEs with a given level of resources. These advantageous results are achieved, at least in part, by leveraging a demand prediction engine to generate demand predictions (for content data sets) based on at least demand statistics.

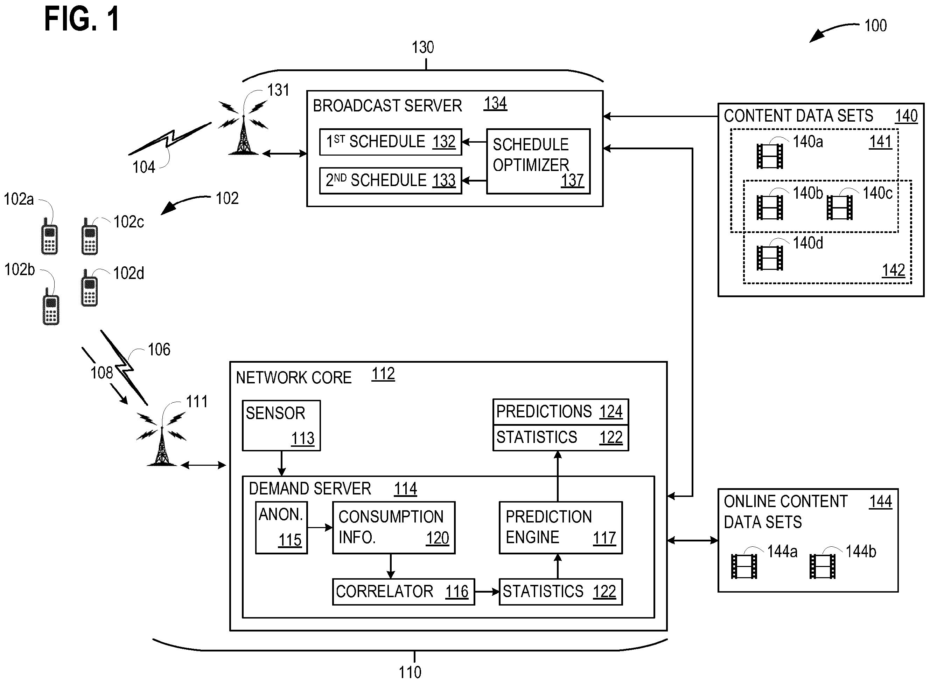

With reference now to the figures, FIG. 1 illustrates an exemplary architecture 100 that advantageously provides for prediction-driven mobile broadcast. A plurality of UEs 102 is receiving a broadcast 104 from a broadcaster 131 (e.g., a broadcast tower) of a broadcast network 130. Plurality of UEs 102 includes a UE 102a, a UE 102b, a UE 102c, and a UE 102d, although it should be understood that plurality of UEs 102 may include a larger number of UEs, in some examples. Also, in some examples, broadcast network 130 may use a larger number of broadcast tower, and in some examples, the descriptions herein for broadcast 104 may also or instead apply to a P2MP broadcast from a wireless network 110. In some examples, one or more of UEs 102a-102d is streaming video (from online content data sets 144, as described below).

Broadcast network 130 includes a broadcast server 134 that has a content schedule optimizer 137 which outputs a broadcast schedule 132 and a broadcast schedule 133. Broadcaster 131 broadcasts content data (e.g., video data files) sourced from content data sets 140 according to broadcast schedule 132 and broadcast schedule 133. For example, content data sets 141 are identified in broadcast schedule 132 and content data sets 142 are identified in broadcast schedule 133.

Content schedule optimizer 137 receives demand predictions 124, and also demand statistics 122 in some examples, and uses the received information to generate broadcast schedule 133, as described in further detail below. In the illustrated example, content data sets 141 includes a content data set 140a, a content data set 140b, and a content data set 140c, which are broadcast according to (i.e., at selected times) broadcast schedule 132. Upon receiving feedback from wireless network, in the form of demand predictions 124 and demand statistics 122, content schedule optimizer 137 changes the programming in broadcast schedule 133.

Broadcast schedule 133 identifies content data sets 142, which drops content data set 140a, keeps content data set 140b and content data set 140c (although possibly broadcast at different times or on different days), and adds a content data set 140d. This is because demand predictions 124 indicate which content data sets (and corresponding times, in some examples) will be the most popular for some upcoming time period.

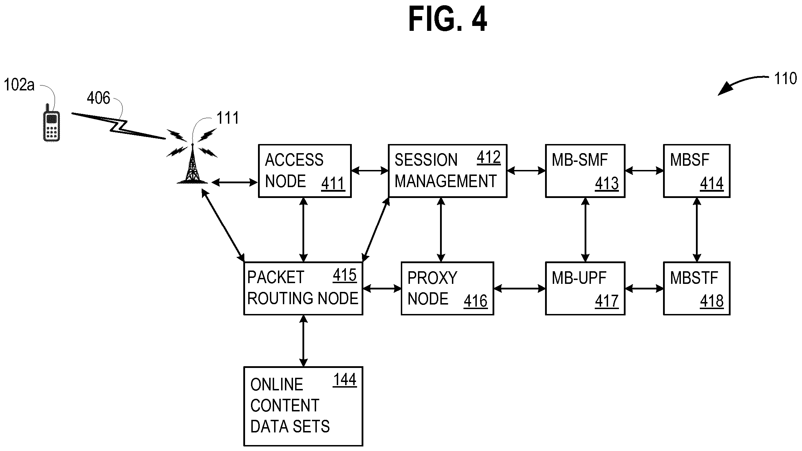

In order to produce demand predictions 124 and demand statistics 122, wireless network 110 monitors behavior of plurality of UEs 102 and correlates it with information in broadcast schedule 132, retrieved from broadcast server 134. Wireless network 110 has a radio access network (RAN) 111 that provides a two-way enhanced mobile broadband (eMBB) air interface 106 that includes a cellular uplink 108 for UEs in plurality of UEs 102. Wireless network 110 may be a fifth generation (5G) cellular network, a fourth generation (4G) cellular network, or another generation, and is shown in further detail in FIG. 4.

Cellular uplink 108 collects data that is assessed and/or filtered by a sensor 113 and compiled into data consumption information 120. Sensor 113 is operable to determine, using cellular uplink 108, data consumption information 120 for plurality of UEs 102 receiving broadcast 104. In some examples, sensor 113 is within RAN 111, in some examples, sensor 113 is within a wireless network core 112, and in some examples, the functionality described for sensor 113 (and other components described herein) are distributed among various portions of wireless network 110.

In some examples, one or more of UEs 102a-102d is streaming video using eMBB from online content data sets 144, which may be Youtube, Netflix, or another streaming video service. Data consumption information 120 includes which ones of a content data set 144a and a content data set 144b is watched, how often, by how many UEs, and the amount (i.e., most or all, versus just a small portion). This information may be derived from eMBB data sessions. Even though content data set 144a and content data set 144b are not broadcast by broadcast network 130, consumption information regarding content data set 144a and content data set 144b may be relevant in predicting popularity of similar content within content data sets140 or suggesting new programs (e.g., new content data sets) for production or acquisition by broadcast network 130.

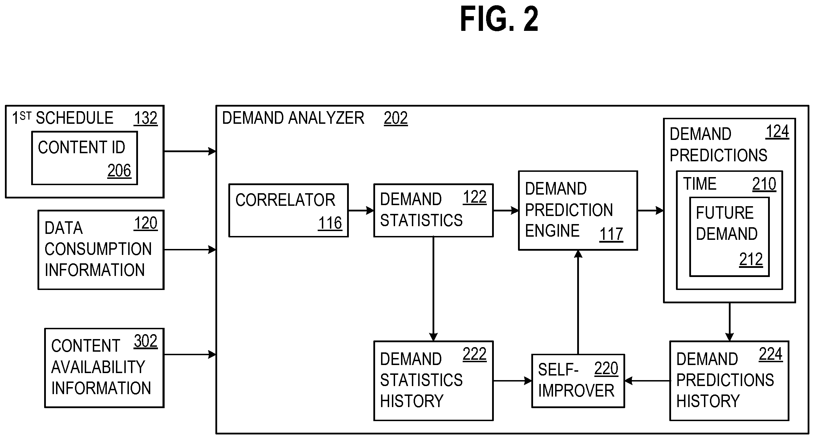

In some examples, an anonymizer 115 anonymizes data consumption information 120. This collects the counts of UEs that tune into various broadcasts, but without identifying specific UEs. In some examples, anonymizer 115 is within a demand server 114. Data consumption information 120 and broadcast schedule 132 are provided to a correlator 116, which generates demand statistics 122. (This is shown in further detail in FIG. 2). Demand statistics 122 are provided to a demand prediction engine 117 that generates demand predictions 124, based on at least demand statistics 122. Demand predictions 124 indicate a future demand for content data sets in a future time period.

FIG. 2 illustrates a demand analyzer 202 that includes correlator 116, demand prediction engine 117, and a self-improver 220 that provides self-learning capability for demand prediction engine 117 so that the performance of demand prediction engine 117 may improve over time. The functionality of demand analyzer may be spread among multiple components of wireless network 110, in some examples.

Broadcast schedule 132 includes content identification 206 that identifies which ones of content data sets 141 were broadcast and at what times (e.g., start times and either durations or stop times). Data consumption information 120 identifies the count of UEs tuned into broadcast 104 at which times. Correlator 116 correlates data consumption information 120 with content identification 206 into demand statistics 122 that indicate how many UEs were tuned into which content data set broadcast, and for how long. Content data sets with a large number of viewers for the entire (or most of) the duration are identified, as well as content data sets with few viewers, content data sets with viewers tuning out after a short time, and content data sets with late viewers (indicating an inconvenient start time) may be identified - even with anonymized data. That is, demand statistics 122 includes the amounts of content data sets consumed by plurality of UEs 102 (i.e., viewed), in some examples. In some examples, correlator 116 comprises a machine learning (ML) model (or artificial intelligence, AI, which is included within ML, as used herein).

Demand prediction engine 117 receives demand statistics 122 to generate demand predictions 124 that has future demand 212 in a future time period 210 for the more popular ones of content data sets 140a-140d. Time periods may be days, weeks, and/or months. In some examples, future time period 210 includes a preferred time of day. In some examples, content availability information 302, which indicates which ones of content data sets 140a-140d are available, is provided to demand prediction engine 117 so that demand prediction engine 117 is able to select from available programming and exclude unavailable programming. In some examples, demand prediction engine 117 comprises an ML model.

In some examples, demand statistics 122 are retained for a time period within an anonymized demand statistics history 222 (e.g., a moving window), and demand predictions 124 are also retained for a time period within a demand predictions history 224. Self-improver 220 is operable to further train demand prediction engine 117 using demand predictions history 224 and anonymized demand statistics history 222 to improve the accuracy of demand predictions history 224 as time progresses. That is, self-improver 220 includes ML training functionality.

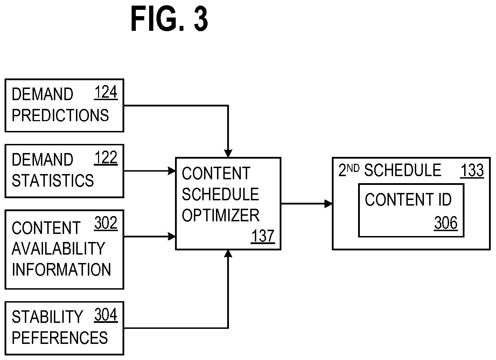

FIG. 3 illustrates further detail for content schedule optimizer 137. Demand predictions 124, demand statistics 122, content availability information 302, and stability preferences 304 are provided to content schedule optimizer 137 for generating broadcast schedule 133. Content availability information 302 identifies which ones of content data sets 140a-140d are available, and also possibly time constraints. Stability preferences 304 is set in order to prevent overly-drastic changes to the programming schedule. Viewers may expect, for example, certain programs to be broadcast at certain times of day and/or for some minimum number of days or weeks. Stability preferences 304 helps to balance keeping schedules predictable (which helps retain viewers) with dropping unpopular content and emphasizing more popular content. In some examples, content schedule optimizer 137 comprises an ML model.

Broadcast schedule 133 includes content identification 306 that identifies the selected ones of content data sets 140a-140d. In the illustrated example, this includes content data sets 140b-140d within content data sets 142. In the next iteration, broadcast schedule 133 is used to generate future version of demand statistics 122 and demand predictions 124.

FIG. 4 illustrates further detail for wireless network 110, showing components associated with a multicast capability. Wireless network 110 may be a cellular network such as a 5G network, a 4G network, or another cellular generation network. UE 102a uses an air interface 406 (which includes eMBB air interface 106) to communicate with RAN 111, which includes a base station. Wireless network 110 has an access node 411, a session management node 412, a packet routing node 415, and a proxy node 416.

RAN 111 is in communication with access node 411 and packet routing node 415. Access node 411 is in communication with session management node 412 and packet routing node 415. Session management node 412 is in communication with packet routing node 415 and proxy node 416. In some examples, online content data sets 144 is accessed by UE 102a via packet routing node 415.

In some 5G examples, RAN 111 comprises a gNodeB (gNB), access node 411 comprises an access mobility function (AMF), session management node 412 comprises a session management function (SMF), and packet routing node 415 comprises a user plane function (UPF). In some 4G examples, RAN 111 comprises an eNodeB (eNB), access node 411 comprises a mobility management entity (MME), session management node 412 comprises a system architecture evolution gateway (SAEGW) control plane (SAEGW-C), and packet routing node 415 comprises an SAEGW-user plane (SAEGW-U). In some examples an SAEGW-C may be referred to, or include, a PGW-control plane (PGW-C), and an SAEGW-U may be referred to, or include, a PGW-user plane (PGW-U). In some examples, proxy node 416 comprises a proxy call session control function (P-CSCF) in both 4G and 5G. In some examples, wireless network 110 has multiple ones of each of the components illustrated, in addition to other components and other connectivity among the illustrated components. In some examples, wireless network 110 has components of multiple cellular technologies operating in parallel in order to provide service to UEs of different cellular generations.

The multicast capability of wireless network 110 is shown in a 5G configuration. Wireless network 110 further comprises at least the additional multicast components illustrated. These include a multicast/broadcast session management function (MB-SMF) 413, a multicast/broadcast service function (NMSF) 414, a multicast/broadcast user plane function (MB-UPF) 417, and a multicast/broadcast service transport function (MBSTF) 418. In some examples, the multicast capability of wireless network 110 provides broadcast 104.

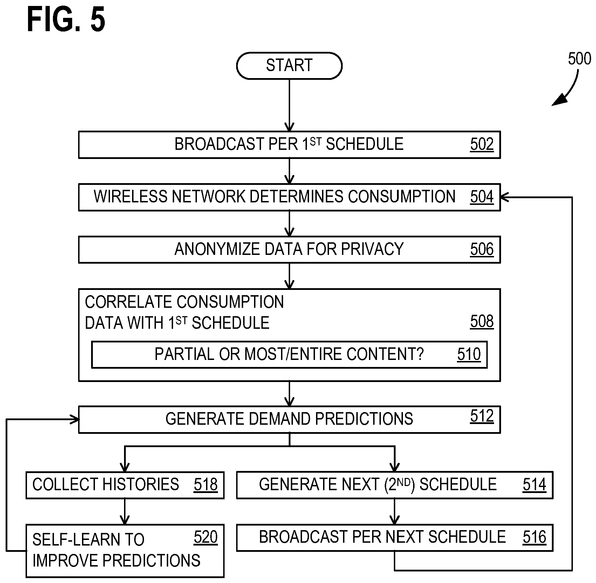

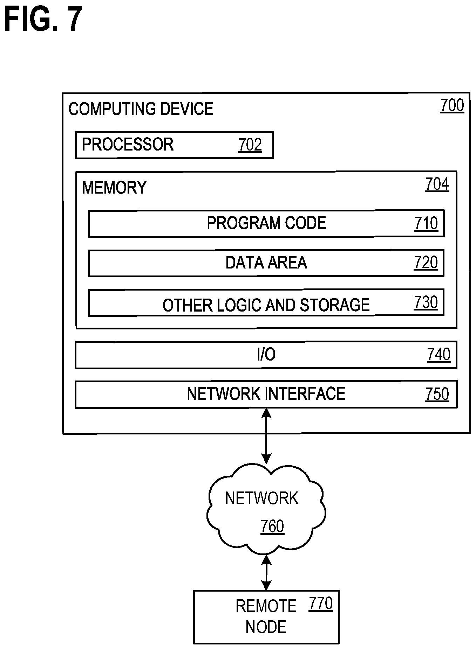

FIG. 5 illustrates a flowchart 500 of exemplary operations associated with architecture 100. In some examples, at least a portion of flowchart 500 may be performed using one or more computing devices 700 of FIG. 7. Flowchart 500 commences with broadcasting content data sets 141 identified in broadcast schedule 132 to plurality of UEs 102 in operation 502. In operation 504, sensor 113 uses cellular uplink 108 to determine data consumption information 120 for plurality of UEs 102 that are receiving broadcast 104 of content data sets 141 identified in broadcast schedule 132. In some examples, sensor 113 also captures consumption of streaming video (e.g., content data sets 144a and 144b) for inclusion in data consumption information 120.

Anonymizer 115 anonymizes data consumption information 120 in operation 506, and correlator 116 correlates data consumption information 120 with content identification 206 in broadcast schedule 132 into demand statistics 122 in operation 508. In some examples, this includes operation 510, which determines amounts of content data sets 140a-140c consumed by plurality of UEs 102. In such examples, demand statistics 122 indicate the amounts of content data sets consumed by plurality of UEs 102, and may further include times of day.

In operation 512, demand prediction engine 117 generates demand predictions 124 based on at least demand statistics 122. In operation 514, content schedule optimizer 137 generates broadcast schedule 133 based on at least demand predictions 124, stability preferences 304, and content availability information 302. In some examples, demand statistics 122 are also used. Operation 516 broadcasts content data sets 142 identified in broadcast schedule 133 to plurality of UEs 102, and flowchart 500 returns to operation 504 for another cycle of prediction-driven scheduling.

In parallel, operations 518 and 520 improve the performance of demand prediction engine 117. Demand predictions history 224 and anonymized demand statistics history 222 are collected in operation 518, and operation 520 further trains demand prediction engine 117 using demand predictions history 224 and anonymized demand statistics history 222.

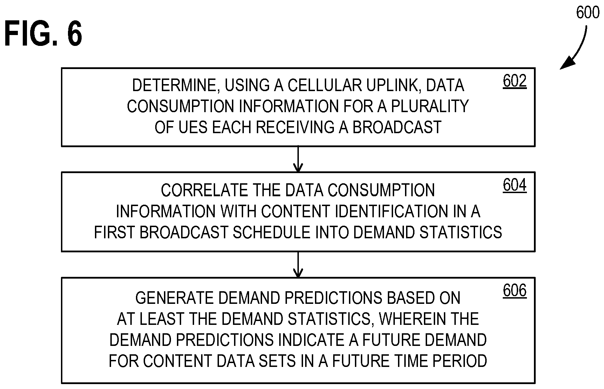

FIG. 6 illustrates a flowchart 600 of exemplary operations associated with examples of architecture 100. In some examples, at least a portion of flowchart 600 may be performed using one or more computing devices 700 of FIG. 7. Flowchart 600 commences with operation 602, which includes determining, using a cellular uplink, data consumption information for a plurality of UEs receiving a broadcast.

Operation 604 includes correlating the data consumption information with content identification in a first broadcast schedule into demand statistics. Operation 606 includes generating demand predictions based on at least the demand statistics, wherein the demand predictions indicate a future demand for content data sets in a future time period.

FIG. 7 illustrates a block diagram of computing device 700 that may be used as any component described herein that may require computational or storage capacity. Computing device 700 has at least a processor 702 and a memory 704 that holds program code 710, data area 720, and other logic and storage 730. Memory 704 is any device allowing information, such as computer executable instructions and/or other data, to be stored and retrieved. For example, memory 704 may include one or more random access memory (RAM) modules, flash memory modules, hard disks, solid-state disks, persistent memory devices, and/or optical disks. Program code 710 comprises computer executable instructions and computer executable components including instructions used to perform operations described herein. Data area 720 holds data used to perform operations described herein. Memory 704 also includes other logic and storage 730 that performs or facilitates other functions disclosed herein or otherwise required of computing device 700. An input/output (I/O) component 740 facilitates receiving input from users and other devices and generating displays for users and outputs for other devices. A network interface 750 permits communication over external network 760 with a remote node 770, which may represent another implementation of computing device 700. For example, a remote node 770 may represent another of the above-noted nodes within architecture 100.

### Additional Examples

An example system comprises: a sensor operable to determine, using a cellular uplink, data consumption information for a plurality of UEs receiving a broadcast; a correlator operable to correlate the data consumption information with content identification in a first broadcast schedule into demand statistics; and a demand prediction engine operable to generate demand predictions based on at least the demand statistics, wherein the demand predictions indicate a future demand for content data sets in a future time period.

Another example system comprises: a processor; and a computer-readable medium storing instructions that are operative upon execution by the processor to: determine, using a cellular uplink, data consumption information for a plurality of UEs receiving a broadcast; correlate the data consumption information with content identification in a first broadcast schedule into demand statistics; and generate demand predictions based on at least the demand statistics, wherein the demand predictions indicate a future demand for content data sets in a future time period.

An example method comprises: determining, using a cellular uplink, data consumption information for a plurality of UEs receiving a broadcast; correlating the data consumption information with content identification in a first broadcast schedule into demand statistics; and generating demand predictions based on at least the demand statistics, wherein the demand predictions indicate a future demand for content data sets in a future time period.

One or more example computer storage devices has computer-executable instructions stored thereon, which, upon execution by a computer, cause the computer to perform operations comprising: determining, using a cellular uplink, data consumption information for a plurality of UEs receiving a broadcast; correlating the data consumption information with content identification in a first broadcast schedule into demand statistics; and generating demand predictions based on at least the demand statistics, wherein the demand predictions indicate a future demand for content data sets in a future time period.

Alternatively, or in addition to the other examples described herein, examples include any combination of the following:
- n anonymizer operable to anonymize data consumption information;
- correlating the data consumption information with the content identification in the first broadcast schedule comprises: determining amounts of content data sets consumed by the plurality ofUEs;
- the demand statistics indicate the amounts of content data sets consumed by the plurality of UEs;
- a self-improver operable to further train the demand prediction engine using a demand predictions history and an anonymized demand statistics history;
- the sensor is located within a RAN of a wireless network;
- a content schedule optimizer operable to generate a second broadcast schedule based on at least the demand predictions, stability preferences, and content availability information;
- a broadcaster operable to broadcast, to the plurality of UEs, content data sets identified in the second broadcast schedule;
- the demand prediction engine comprises an ML model;
- the content schedule optimizer comprises an ML model;
- the cellular uplink comprises an eMBB uplink;
- the sensor is located within a core network of the wireless network;
- capturing consumption of streaming video for inclusion in the data consumption information;
- the RAN comprises a gNB;
- the RAN comprises an eNB;
- the wireless network comprises a 5G cellular network;
- the wireless network comprises a 4G cellular network;
- the correlator is operable to correlate anonymized data consumption information with content identification;
- the correlator comprises an ML model;
- the demand statistics are anonymized;
- the future time period includes a future day, a future week, or a future month;
- the future time period includes a time of day;
- the demand statistics include times of day; and
- the content schedule optimizer is further operable to generate the second broadcast schedule based on the demand statistics.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure. It will be understood that the benefits and advantages described above may relate to one embodiment or may relate to several embodiments. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of."

Having described aspects of the disclosure in detail, it will be apparent that modifications and variations are possible without departing from the scope of aspects of the disclosure as defined in the appended claims. As various changes may be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprising:
a sensor operable to determine, using a cellular uplink, data consumption information for a plurality of user equipment (UEs) receiving a broadcast;
a correlator operable to correlate the data consumption information with content identification in a first broadcast schedule into demand statistics; and
a demand prediction engine operable to generate demand predictions based on at least the demand statistics, wherein the demand predictions indicate a future demand for content data sets in a future time period.

2. The system of claim 1, further comprising:
an anonymizer operable to anonymize data consumption information.

3. The system of claim 1, wherein correlating the data consumption information with the content identification in the first broadcast schedule comprises:
determining amounts of content data sets consumed by the plurality of UEs, wherein the demand statistics indicate the amounts of content data sets consumed by the plurality of UEs.

4. The system of claim 1, further comprising:
a self-improver operable to further train the demand prediction engine using a demand predictions history and an anonymized demand statistics history.

5. The system of claim 1, wherein the sensor is located within a radio access network (RAN) of a wireless network.

6. The system of claim 1, further comprising:
a content schedule optimizer operable to generate a second broadcast schedule based on at least the demand predictions, stability preferences, and content availability information; and
a broadcaster operable to broadcast, to the plurality of UEs, content data sets identified in the second broadcast schedule.

7. The system of claim 6, wherein the demand prediction engine and the content schedule optimizer each comprises a machine learning (ML) model.

8. A method comprising:
determining, using a cellular uplink, data consumption information for a plurality of user equipment (UEs) receiving a broadcast;
correlating the data consumption information with content identification in a first broadcast schedule into demand statistics; and
generating demand predictions based on at least the demand statistics, wherein the demand predictions indicate a future demand for content data sets in a future time period.

9. The method of claim 8, further comprising:
anonymizing the data consumption information.

10. The method of claim 8, wherein correlating the data consumption information with the content identification in the first broadcast schedule comprises:
determining amounts of content data sets consumed by the plurality of UEs, wherein the demand statistics indicate the amounts of content data sets consumed by the plurality of UEs.

11. The method of claim 8, further comprising:
further training a demand prediction engine using a demand predictions history and an anonymized demand statistics history.

12. The method of claim 8, further comprising:
using a sensor located within a radio access network (RAN) of a wireless network to determine the data consumption information.

13. The method of claim 8, further comprising:
generating a second broadcast schedule based on at least the demand predictions, stability preferences, and content availability information; and
broadcasting, to the plurality of UEs, content data sets identified in the second broadcast schedule.

14. The method of claim 13, wherein generating demand predictions comprises using a machine learning (ML) model, and generating a second broadcast schedule comprises using an ML model.

15. One or more computer storage devices having computer-executable instructions stored thereon, which, upon execution by a computer, cause the computer to perform the method of any one of claims 8 to 14.
